# EUROPEAN PATENT SPECIFICATION

(11) **EP 4 080 307 B1**
(45) Date of publication and mention of the grant of the patent: **01.01.2025**
(21) Application number: 22165955.0
(22) Date of filing: 31.03.2022
(51) Int. Cl.: G05D 1/00

(54) **REMOTE FUNCTION SELECTION DEVICE**
FERNFUNKTIONSAUSWAHLVORRICHTUNG
DISPOSITIF DE SÉLECTION D'UNE FONCTION À DISTANCE

(30) Priority: 23.04.2021 JP 2021073122
(43) Date of publication of application: 26.10.2022
(73) Proprietor: TOYOTA JIDOSHA KABUSHIKI KAISHA, Toyota-shi, Aichi-ken, 471-8571 (JP)
(72) Inventor: KOBAYASHI, Hiromitsu, Toyota-shi, Aichi-ken 471-8571 (JP); URANO, Hiromitsu, Toyota-shi, Aichi-ken 471-8571 (JP); OTAKI, Sho, Toyota-shi, Aichi-ken 471-8571 (JP); JUNG, Hojung, Toyota-shi, Aichi-ken 471-8571 (JP); TAKASHIMA, Toru, Toyota-shi, Aichi-ken 471-8571 (JP); NIWA, Satoru, Toyota-shi, Aichi-ken 471-8571 (JP); SUZUKI, Takashi, Toyota-shi, Aichi-ken 471-8571 (JP); AKATSUKA, Kosuke, Toyota-shi, Aichi-ken 471-8571 (JP)
(74) Representative: Cabinet Beau de Loménie

(56) References cited:
- EP-A1- 3 772 678
- US-A1- 2020 047 773

## Description

### BACKGROUND OF THE INVENTION

### 1. Field of the Invention

The present disclosure relates to a remote function selection device.

### 2. Description of Related Art

There are automated drive vehicles that can travel through automated drive and execute remote travel through a remote function implemented based on an operation by a remote operator. Such an automated drive vehicle performs remote travel using the remote function in accordance with an operation by the remote operator when the vehicle cannot travel through automated drive, for example. Such an automated drive vehicle is described in Japanese Patent No. 6663506 (JP 6663506 B) and in the corresponding U.S. patent application US 2020/047773, for example. Another example of automated drive vehicle, with remote monitoring capability , is provided by the European Patent Application EP 3 772 678 A1.

### SUMMARY OF THE INVENTION

An automated drive vehicle such as that described above can occasionally execute a plurality of remote functions. In this case, it is desired to appropriately select which of the remote functions is to be executed.

A first aspect of the present disclosure provides a remote function selection device. The remote function selection device is configured to select a remote function to be executed in an automated drive vehicle configured to execute automated drive and remote travel in which the automated drive vehicle travels based on a remote instruction from a remote operator, the automated drive vehicle being provided with a plurality of remote functions for performing the remote travel. The remote function selection device includes: an automated drive determination unit configured to determine whether executing the automated drive at a predetermined timing is impossible; a remote function determination unit configured to determine the remote function that is executable at the predetermined timing when the automated drive determination unit determines that executing the automated drive is impossible; a confidence degree calculation unit configured to predict an action of a target around the automated drive vehicle based on a detection result from an external sensor configured to detect the target and configured to calculate an action prediction confidence degree for the predicted action of the target; and a function selection unit configured to select the remote function to be executed. When the remote function determination unit determines that a plurality of remote functions is executable, the function selection unit is configured to select the remote function to be executed among the remote functions, based on the action prediction confidence degree calculated by the confidence degree calculation unit.

The remote function selection device is configured to calculate an action prediction confidence degree for a target around the automated drive vehicle. The remote function selection device is configured to select a remote function to be executed based on the action prediction confidence degree for the target when the remote function determination unit determines that a plurality of remote functions is executable. With the first aspect described above, the remote function selection device can appropriately select the remote function to be executed using the action prediction confidence degree even when a plurality of remote functions is executable.

In the first aspect described above, the function selection unit may be configured to select a remote function that occupies the remote operator for a long time when the action prediction confidence degree is low, compared to when the action prediction confidence degree is high. When the action prediction confidence degree for a target is low, the target occasionally takes an action that has not been predicted by the automated drive vehicle. When such a target is present, it is possible to flexibly handle variations in the action of the target by the remote operator intervening in the drive operation of the automated drive vehicle. Therefore, when the action prediction confidence degree for a target is low, the remote function selection device selects a remote function that occupies the remote operator for a long time. With the configuration described above, the remote function selection device can select a more appropriate remote function based on the action prediction confidence degree for the target.

In the first aspect described above, the remote function selection device may further include a distance calculation unit configured to calculate a relative distance between the target and the automated drive vehicle. The function selection unit may be configured to select the remote function to be executed among the remote functions determined by the remote function determination unit, based on the action prediction confidence degree and the relative distance. With the configuration described above, the remote function selection device can select a more appropriate remote function in consideration of the relative distance between the target and the automated drive vehicle.

In the first aspect described above, the function selection unit may be configured to select a remote function that occupies the remote operator for a short time when the relative distance is long, compared to when the relative distance is short. When the relative distance between the automated drive vehicle and a detected target is long, there is a temporal margin before the automated drive vehicle and the detected target approach each other. In such a case, it is occasionally not necessary for the remote operator to perform a positive drive operation of the automated drive vehicle. Therefore, the remote function selection device selects a remote function that occupies the remote operator for a short time when the relative distance between the automated drive vehicle and the target is long. Consequently, the remote function selection device can suppress a remote function that occupies the remote operator for a long time being selected excessively. With the configuration described above, it is possible to select a more appropriate remote function based on the relative distance between the automated drive vehicle and the target.

In the first aspect described above, the remote functions may include remote assist and remote drive. With the configuration described above, a more appropriate remote function can be selected from the remote functions including remote assist and remote drive.

With the first aspect of the present disclosure, it is possible to appropriately select a remote function to be executed even when a plurality of remote functions is executable.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates a remote travel system according to an embodiment;
FIG. 2 is a block diagram illustrating an example of the configuration of an automated drive vehicle;
FIG. 3 is a block diagram illustrating an example of the functional configuration of a remote function selection unit;
FIG. 4A illustrates a method of expressing the inside/outside relationship between the automated drive vehicle and an automated drive operation range;
FIG. 4B illustrates the method of expressing the inside/outside relationship between the automated drive vehicle and the automated drive operation range;
FIG. 5A illustrates a state in which the automated drive vehicle travels from the inside to the outside of the automated drive operation range;
FIG. 5B illustrates how the automated drive vehicle which has traveled to the outside of the automated drive operation range is present in a remote function operation range;
FIG. 6A illustrates how the automated drive vehicle is remotely assisted;
FIG. 6B illustrates how the automated drive vehicle is remotely driven;
FIG. 7 is a flowchart illustrating the flow of a remote function selection process performed by the remote function selection unit; and
FIG. 8 is a flowchart illustrating the details of the remote function selection process performed by a function selection unit of the remote function selection unit.

### DETAILED DESCRIPTION OF EMBODIMENTS

An exemplary embodiment will be described below with reference to the drawings. In the drawings, like or corresponding elements are designated by like reference signs to omit redundant description.

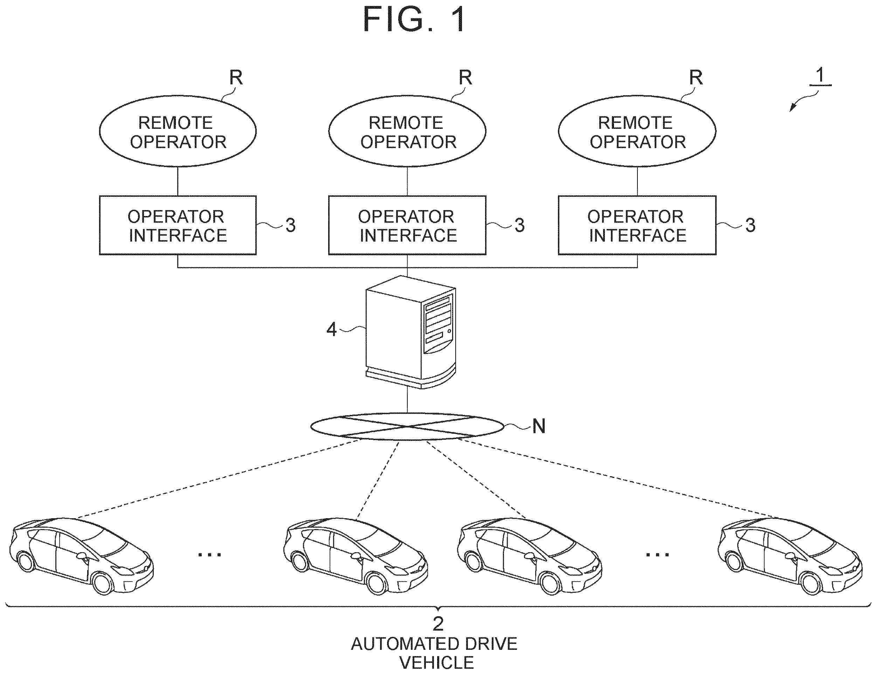

FIG. 1 illustrates a remote travel system 1 according to an embodiment. Automated drive vehicles 2 illustrated in FIG. 1 can execute automated drive and remote travel in which the automated drive vehicles 2 travel based on remote instructions. The remote travel system 1 is a system that remotely drives the automated drive vehicles 2 based on remote instructions from remote operators R in response to remote requests from the automated drive vehicles 2. In the automated drive, the automated drive vehicles 2 travel by autonomously making determinations for automated drive without relying on remote instructions from the remote operators R. The automated drive vehicles 2 make remote requests when the automated drive vehicles 2 cannot autonomously make determinations for automated drive, for example.

The remote operators R are persons that provide remote instructions for the automated drive vehicles 2 to execute remote travel. The number of the remote operators R is not limited, and may be one or two or more. The number of the automated drive vehicles 2 that can communicate with the remote travel system 1 is also not specifically limited. A plurality of remote operators R may provide remote instructions to one automated drive vehicle 2, or one remote operator R may provide remote instructions to two or more automated drive vehicles 2.

In the present embodiment, the automated drive vehicle 2 is provided with a plurality of remote functions. The automated drive vehicle 2 performs remote travel based on a remote instruction from the remote operator R using any of the remote functions. The remote functions are functions for remotely driving the automated drive vehicle 2 based on a remote instruction from the remote operator R. In the present embodiment, examples of the remote functions include remote assist and remote drive, for example.

The remote assist is a technique that allows the remote operator R located at a remote location to make determinations as an alternative to the automated drive vehicle 2, by transmitting outputs (e.g. a camera image, a light detection and ranging (LIDAR) point cloud, etc.) from sensors mounted on the automated drive vehicle 2.

### Applicable Scene Example 1

Examples of the scenes in which the remote assist is applicable are considered to include a scene in which a parked vehicle, a fallen object, etc. is present in the lane in which the automated drive vehicle 2 is traveling and the automated drive vehicle 2 can avoid such a vehicle, object, etc. by traveling off the lane, for example. In this scene, the remote operator R provides remote assist by seeing a forward camera video transmitted from the automated drive vehicle 2, for example. Then, the remote operator R provides the automated drive vehicle 2 with permission to travel off the traveling lane. The automated drive vehicle 2 can travel so as to avoid the parked vehicle etc. by autonomously generating a trajectory based on the instruction.

### Remote Assist Example 2

Examples of the scenes in which the remote assist is applicable are considered to include a scene in which a police officer directs traffic at an intersection using hand signals, for example. In this scene, the remote operator R provides remote assist by seeing a forward camera video transmitted from the automated drive vehicle 2, for example. Then, the remote operator R recognizes the hand signals from the police officer, and provides the automated drive vehicle 2 with permission to proceed etc. The automated drive vehicle 2 can pass through the intersection by autonomously generating a trajectory based on the instruction.

### Remote Assist Example 3

Examples of the scenes in which the remote assist is applicable are considered to include a scene in which the automated drive vehicle 2 has received information that the road along which the automated drive vehicle 2 is going to travel has been blocked via a network before approaching a blocked location, for example. In this scene, the remote operator R provides remote assist by verifying a travel route that detours around the blocked location based on vehicle position information and road blockade information transmitted from the automated drive vehicle 2 and instructing the automated drive vehicle 2 to change the travel route, for example. After receiving a new travel route, the automated drive vehicle 2 can continue to travel by autonomously generating a trajectory based on the received travel route.

### Remote Assist Example 4

Examples of the scenes in which the remote assist is applicable are considered to include a scene in which the automated drive vehicle 2 has detected a traffic sign that is different from traffic signs included in map information, such as a traffic sign temporarily installed for a road work etc., for example. In this scene, the remote operator R provides remote assist by seeing a forward camera video transmitted from the automated drive vehicle 2, for example. Then, the remote operator R recognizes the traffic sign, and provides the automated drive vehicle 2 with information on the recognized traffic sign. The automated drive vehicle 2 can pass through the relevant location by autonomously generating a trajectory based on the traffic sign information.

### Remote Assist Example 5

Examples of the scenes in which the remote assist is applicable are considered to include a scene in which an emergency vehicle is approaching the automated drive vehicle 2, for example. In this scene, the remote operator R provides remote assist by specifying an evacuation location for the automated drive vehicle 2 based on a forward camera video transmitted from the automated drive vehicle 2 and information that indicates the relative position relationship with a surrounding target recognized by the automated drive vehicle 2, for example. The automated drive vehicle 2 can travel toward the evacuation destination by autonomously generating a trajectory toward the evacuation location based on the instruction.

### Remote Assist Example 6

Examples of the scenes in which the remote assist is applicable are considered to include a scene in which the automated drive vehicle 2 enters an intersection with no traffic signals, for example. In this scene, the remote operator R provides remote assist by checking a forward camera video transmitted from the automated drive vehicle 2 and information that indicates the relative position relationship with a surrounding target recognized by the automated drive vehicle 2, for example. Then, the remote operator R provides the automated drive vehicle 2 with permission to enter the intersection etc. The automated drive vehicle 2 can enter the intersection by autonomously generating a trajectory based on the instruction.

The remote drive is not necessarily executed concurrently with the automated drive. The remote drive is a technique that allows information (e.g. mainly camera images) from sensors mounted on a vehicle to be transmitted to a remote location and allows the remote operator R located at the remote location to perform all recognitions, determinations, and operations through input devices (such as a steering wheel, an accelerator pedal, a brake pedal, a shift lever, and a turn signal lever).

In the remote travel system 1, the remote operator R is requested to input a remote instruction (an instruction for remote assist or remote drive) in response to a remote request from the automated drive vehicle 2, for example. The remote operator R inputs a remote instruction to an operator interface 3. A remote travel server 4 transmits the remote instruction to the automated drive vehicle 2 via a network N. The automated drive vehicle 2 executes a remote function in accordance with the remote instruction to travel in accordance with the instruction.

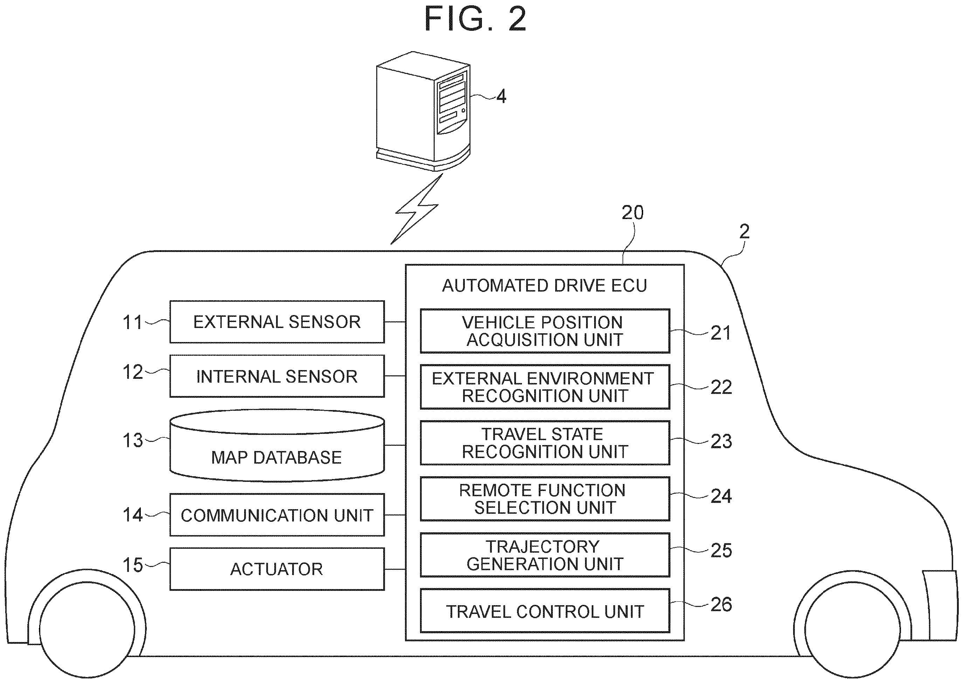

An example of the configuration of the automated drive vehicle 2 will be described. FIG. 2 is a block diagram illustrating an example of the configuration of the automated drive vehicle 2. As illustrated in FIG. 2, the automated drive vehicle 2 includes an automated drive electronic control unit (ECU) 20, by way of example. The automated drive ECU 20 is an electronic control unit that includes a central processing unit (CPU), a read only memory (ROM), a random access memory (RAM), etc. The automated drive ECU 20 implements various functions by the CPU executing a program stored in the ROM or the RAM, for example. The automated drive ECU 20 may be constituted from a plurality of electronic units.

The automated drive ECU 20 is connected to an external sensor 11, an internal sensor 12, a map database 13, a communication unit 14, and an actuator 15.

The external sensor 11 is an in-vehicle sensor that detects the external environment of the automated drive vehicle 2. The external sensor 11 includes at least a camera. The camera is an image capture device that captures an image of the external environment of the automated drive vehicle 2. The camera is provided on the back side of a windshield of the automated drive vehicle 2, for example, to capture an image of a view ahead of the vehicle. The camera transmits information on a captured image of the external environment of the automated drive vehicle 2 to the automated drive ECU 20. The camera may be a monocular camera, or may be a stereo camera. A plurality of cameras may be provided to capture images of the right and left sides and the rear side of the automated drive vehicle 2, besides the view ahead of the automated drive vehicle 2. The automated drive vehicle 2 may be equipped with an external camera for the remote operator R. The external camera for the remote operator R captures at least an image of the view ahead of the automated drive vehicle 2. The external camera for the remote operator R may be constituted from a plurality of cameras that captures images of the surroundings, including the lateral sides and the rear side, of the automated drive vehicle 2.

The external sensor 11 may include a radar sensor. The radar sensor is a detection device that detects an object around the automated drive vehicle 2 utilizing radio waves (e.g. millimeter waves) or light. Examples of the radar sensor include a millimeter-wave radar and a laser imaging detection and ranging (LIDAR). The radar sensor transmits radio waves or light to the surroundings of the automated drive vehicle 2, and detects an object by receiving the radio waves or light reflected by the object. The radar sensor transmits information on the detected object to the automated drive ECU 20. Examples of the object include stationary objects such as guardrails and buildings and mobile objects such as pedestrians, bicycles, and other vehicles. The external sensor 11 may include a sound detection sensor that detects a sound from the outside of the automated drive vehicle 2.

When inside/outside determinations for an automated drive operation range and a remote function operation range are made based on the state of radio waves, as discussed in detail later, the external sensor 11 may include a sensor such as a portable radio wave antenna.

In a vehicle provided with an automated drive system that performs the automated drive and a remote system that performs the remote functions, the various sensors of the external sensor 11 are occasionally shared and occasionally not shared by the automated drive system and the remote system. When the sensors are shared, for example, it is conceivable to use a common camera as a camera that recognizes the color of traffic signals in the automated drive system and a camera that captures a video to be transmitted to the remote operator R when executing the remote drive among the remote functions.

An example of a case where the sensors are not shared will be described. In this case, it is conceivable for the automated drive system to use a radar in order to recognize the vehicle speed, for example. On the other hand, it is not likely that the remote operator R visually checks speed value information observed from a radar when executing the remote drive among the remote functions. For example, while it is conceivable for an anti-collision system (e.g. a pre-collision safety system) in the automated drive system to use the radar, it is not likely that the remote operator R directly uses the radar. In another example, it is conceivable for the automated drive system to use LIDAR information in order to measure a distance accurately, for example. Meanwhile, it is not likely that the remote operator R uses LIDAR information in priority to images captured by the camera in the remote drive.

The internal sensor 12 is an in-vehicle sensor that detects the state of the automated drive vehicle 2. The internal sensor 12 includes a global positioning system (GPS) sensor, an inertial measurement unit (IMU), a vehicle speed sensor, etc. The GPS sensor measures the position of the automated drive vehicle 2 (e.g. the latitude and the longitude of the automated drive vehicle 2) by receiving signals from three or more GPS satellites. The GPS sensor transmits information on the measured position of the automated drive vehicle 2 to the automated drive ECU 20.

The IMU includes an acceleration sensor, a yaw rate sensor, etc. The acceleration sensor is a detector that detects the acceleration of the automated drive vehicle 2. The acceleration sensor includes a front-rear acceleration sensor that detects the acceleration of the automated drive vehicle 2 in the front-rear direction, for example. The acceleration sensor may also include a lateral acceleration sensor that detects the lateral acceleration of the automated drive vehicle 2. The acceleration sensor transmits information on the acceleration of the automated drive vehicle 2 to the automated drive ECU 20, for example. The yaw rate sensor is a detector that detects the yaw rate (angular speed of rotation) about the vertical axis of the center of gravity of the automated drive vehicle 2. The yaw rate sensor may be a gyro sensor, for example. The yaw rate sensor transmits information on the detected yaw rate of the automated drive vehicle 2 to the automated drive ECU 20.

The vehicle speed sensor is a detector that detects the speed of the automated drive vehicle 2. The vehicle speed sensor may be a wheel speed sensor provided on a wheel of the automated drive vehicle 2, or a drive shaft that rotates together with the wheel, to detect the rotational speed of the wheel. The vehicle speed sensor transmits information on the detected vehicle speed (wheel speed) to the automated drive ECU 20.

The automated drive ECU 20 can calculate the kinetic state (position, speed, acceleration, azimuth angle, roll angle, pitch angle, yaw angle, rotational speed, etc.) of the automated drive vehicle 2 based on the detection result from the internal sensor 12.

While the sensors are classified into the external sensor 11 and the internal sensor 12, there is no difference between the external sensor 11 and the internal sensor 12 in the functionality as parts that observe an object and output data on the object to the automated drive ECU 20.

The map database 13 is a database that stores map information. The map database 13 is formed in a storage device such as a hard disk drive (HDD) mounted on the automated drive vehicle 2, for example. The map information includes position information on roads, information on the shape of the roads (e.g. curvature information), position information on intersections and branches, etc. The map information may include information on traffic regulations, such as the legal speed, associated with position information. The map information may include information on targets that are used to acquire position information on the automated drive vehicle 2. The targets may be road signs, road markings, traffic signals, utility poles, etc. The map database 13 may be constituted in a server that can communicate with the automated drive vehicle 2.

The communication unit 14 is a communication device that controls wireless communication with the outside of the automated drive vehicle 2. The communication unit 14 transmits and receives various types of information to and from the remote travel server 4 via the network N.

The actuator 15 is a device that is used to control the automated drive vehicle 2. The actuator 15 includes at least a drive actuator, a brake actuator, and a steering actuator. The drive actuator controls a drive force of the automated drive vehicle 2 by controlling the amount (throttle valve opening degree) of air to be supplied to an engine in accordance with a control signal from the automated drive ECU 20. When the automated drive vehicle 2 is a hybrid electric vehicle, the drive force is controlled with a control signal from the automated drive ECU 20 input to a motor as a power source, besides the amount of air to be supplied to the engine. When the automated drive vehicle 2 is a battery electric vehicle, the drive force is controlled with a control signal from the automated drive ECU 20 input to a motor as a power source. The motor as a power source in such cases constitutes the actuator 15.

The brake actuator controls a braking force to be applied to the wheels of the automated drive vehicle 2 by controlling a brake system in accordance with a control signal from the automated drive ECU 20. The brake system may be a hydraulic brake system, for example. The steering actuator controls drive of an assist motor that controls steering torque, of an electric power steering system, in accordance with a control signal from the automated drive ECU 20. Consequently, the steering actuator controls steering torque of the automated drive vehicle 2.

Next, an example of the functional configuration of the automated drive ECU 20 will be described. The automated drive ECU 20 includes a vehicle position acquisition unit 21, an external environment recognition unit 22, a travel state recognition unit 23, a remote function selection unit (remote function selection device) 24, a trajectory generation unit 25, and a travel control unit 26.

The vehicle position acquisition unit 21 acquires information on the vehicle position of the automated drive vehicle 2 based on the position information from the GPS sensor and the map information from the map database 13. The vehicle position acquisition unit 21 may also acquire information on the vehicle position of the automated drive vehicle 2 using a simultaneous localization and mapping (SLAM) technique using the target information included in the map information from the map database 13 and the detection result from the external sensor 11. The vehicle position acquisition unit 21 may recognize the lateral position of the automated drive vehicle 2 with respect to a lane (position of the automated drive vehicle 2 in the lane width direction) from the vehicle position relationship between marking lines of the lane and the automated drive vehicle 2, and include the recognized lateral position in the vehicle position information. The vehicle position acquisition unit 21 may acquire information on the vehicle position of the automated drive vehicle 2 by a predetermined method other than those described above.

The external environment recognition unit 22 recognizes the external environment of the automated drive vehicle 2 based on the detection result from the external sensor 11. The external environment includes the position of surrounding objects relative to the automated drive vehicle 2. Information on the external environment may include the speed and the direction of movement of the surrounding objects relative to the automated drive vehicle 2. The external environment information may include the type of the objects such as other vehicles, pedestrians, and bicycles. The types of the objects can be identified by a method such as pattern matching. The external environment information may include the result of recognition of marking lines (recognition of white lines) around the automated drive vehicle 2. The external environment information may include the result of recognition of the illumination state of traffic signals. The external environment recognition unit 22 can recognize the illumination state of a traffic signal ahead of the automated drive vehicle 2 (such as whether the traffic signal is in an illumination state that enables passage or an illumination state that prohibits passage) based on an image from the camera of the external sensor 11, for example.

The travel state recognition unit 23 recognizes the travel state of the automated drive vehicle 2 based on the detection result from the internal sensor 12. The travel state includes the vehicle speed of the automated drive vehicle 2, the acceleration of the automated drive vehicle 2, and the yaw rate of the automated drive vehicle 2. Specifically, the travel state recognition unit 23 recognizes the vehicle speed of the automated drive vehicle 2 based on the vehicle speed information from the vehicle speed sensor. The travel state recognition unit 23 recognizes the acceleration of the automated drive vehicle 2 based on the acceleration information from the acceleration sensor. The travel state recognition unit 23 recognizes the direction of the automated drive vehicle 2 based on the yaw rate information from the yaw rate sensor.

The remote function selection unit 24 determines whether a remote request should be sent to the remote operator R. The remote function selection unit 24 sends a remote request when the automated drive vehicle 2 cannot autonomously perform automated drive. When there is a plurality of remote functions that are executable (operable) when sending a remote request, the remote function selection unit 24 selects a remote function to be executed and sends a remote request to the remote operator R.

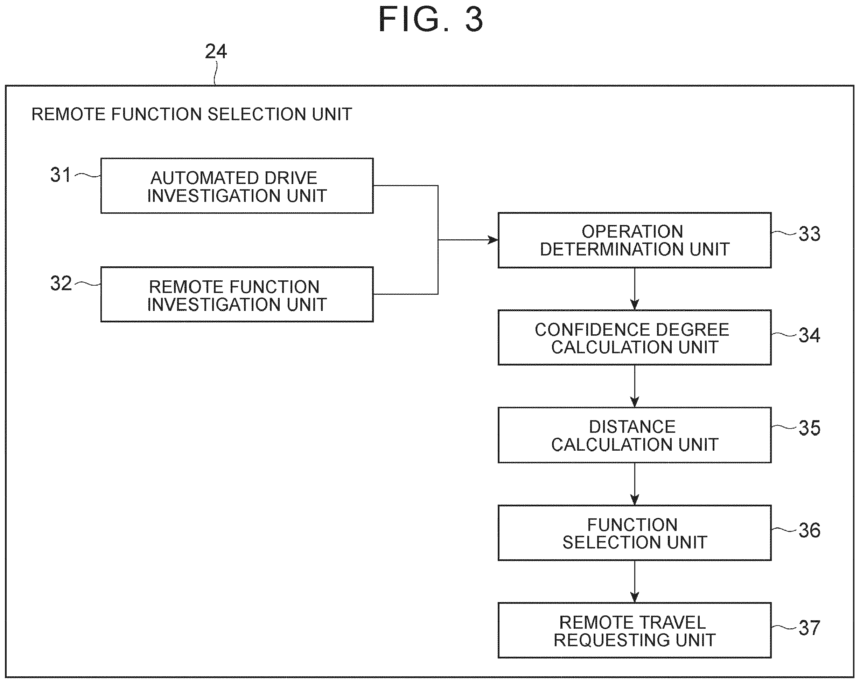

More particularly, as illustrated in FIG. 3, the remote function selection unit 24 includes an automated drive investigation unit 31, a remote function investigation unit 32, an operation determination unit 33, a confidence degree calculation unit 34, a distance calculation unit 35, a function selection unit 36, and a remote travel requesting unit 37.

The automated drive investigation unit 31 checks the operation state (whether in an operation state or in a non-operation state) of a system for performing automated drive of the automated drive vehicle 2 at predetermined timings. The automated drive investigation unit 31 checks the operation state at the present and a future timing as the predetermined timings. Specifically, the automated drive investigation unit 31 determines whether the automated drive vehicle 2 is inside an automated drive operation range or outside the automated drive operation range based on inputs from the external sensor 11 and the internal sensor 12. Automated drive is executable if the automated drive vehicle 2 is inside the automated drive operation range. Automated drive is not executable if the automated drive vehicle 2 is outside the automated drive operation range.

Whether the automated drive vehicle 2 is inside or outside the automated drive operation range is determined in accordance with factors including the inside/outside relationship between the automated drive vehicle 2 and the automated drive operation range determined in terms of the positional relationship, and the inside/outside relationship between the automated drive vehicle 2 and the automated drive operation range determined in terms of the time axis.

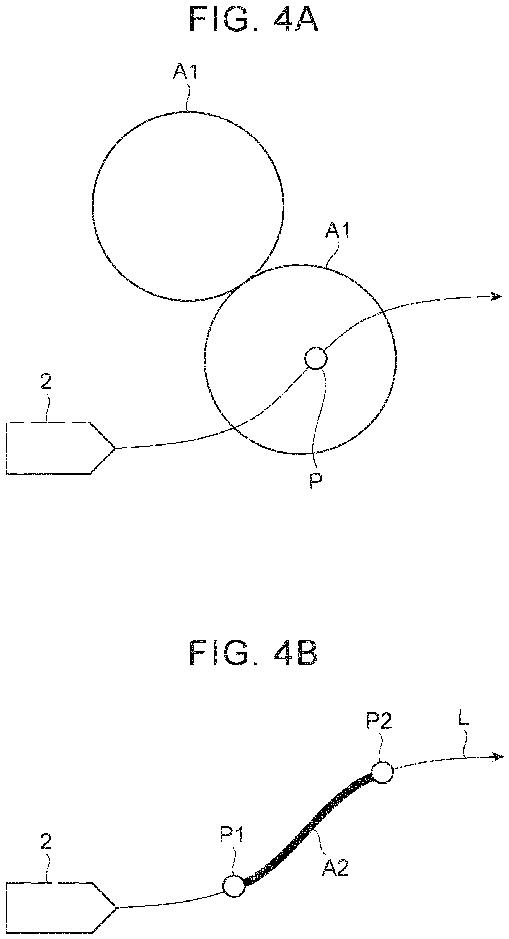

First, a method of expressing the inside/outside relationship between the automated drive vehicle 2 and the automated drive operation range determined in terms of the positional relationship will be described. In this case, as illustrated in FIG. 4A, for example, the inside/outside relationship can be expressed by disposing automated drive operation ranges A1 and the automated drive vehicle 2 in a space and determining whether the present position of the automated drive vehicle 2 is inside the automated drive operation ranges A1 or outside the automated drive operation ranges A1. In the example illustrated in FIG. 4A, the present position of the automated drive vehicle 2 is outside the automated drive operation ranges A1.

There is also a method of expressing whether the automated drive vehicle 2 will be inside the automated drive operation ranges A1 or outside the automated drive operation ranges A1 at a future timing from the position of the automated drive vehicle 2 at a future time based on information from a navigation system etc. In the example illustrated in FIG. 4A, the automated drive vehicle 2 will be inside the automated drive operation range A1 at a location P to be reached at a certain future timing.

The inside/outside relationship can also be expressed based on a trajectory L of an automated drive system as illustrated in FIG. 4B, for example, by determining whether the automated drive vehicle 2 will be inside an automated drive operation range A2 or outside the automated drive operation range A2 on the trajectory L which is line-shaped or band-shaped. In the example illustrated in FIG. 4B, the present position of the automated drive vehicle 2 is outside the automated drive operation range A2. Meanwhile, the automated drive vehicle 2 will be inside the automated drive operation range A2 when the automated drive vehicle 2 is located between a location P1 and a location P2 on the trajectory L on which the automated drive vehicle 2 will travel in the future. The examples described with reference to FIGS. 4A and 4B differ from each other only in the expression method, and do not technically differ from each other.

Next, a method of expressing the inside/outside relationship between the automated drive vehicle 2 and the automated drive operation range determined in terms of the time axis will be described. In this case, the inside/outside relationship can be expressed by the time when the automated drive vehicle 2 reaches the location P in the example illustrated in FIG. 4A, and by the time for which the automated drive vehicle 2 travels from the location P1 to the location P2 in the example illustrated in FIG. 4B. These times can be estimated based on the route plan from the navigation system or the automated drive system, traffic congestion information, etc.

The automated drive investigation unit 31 outputs automated drive operation information, which indicates whether the automated drive vehicle 2 is inside the automated drive operation range or outside the automated drive operation range, to the operation determination unit 33. The automated drive operation information includes one or both of the information indicating the inside/outside relationship between the automated drive vehicle 2 and the automated drive operation range determined in terms of the positional relationship and the information indicating the inside/outside relationship between the automated drive vehicle 2 and the automated drive operation range determined in terms of the time axis discussed above.

It is possible to determine, based on the automated drive operation information, whether the automated drive vehicle 2 is inside the automated drive operation range or outside the automated drive operation range at the present timing (present position). It is also possible to determine, based on the automated drive operation information, whether the automated drive vehicle 2 will be inside the automated drive operation range or outside the automated drive operation range at a future timing or at a future location.

The automated drive system according to the present embodiment may be any system. The automated drive level of the automated drive system may be any level. When a database such as a map, vehicle-to-vehicle communication, or other external devices such as infrastructure facilities are required in order to implement the automated drive system, the automated drive investigation unit 31 may receive various types of information input from such devices.

The automated drive investigation unit 31 may use a database for making inside/outside determinations for the automated drive operation range. When the area for provision of an automated drive service is defined by the location, for example, it is possible to make inside/outside determinations for the automated drive operation range based on map data, data from the GPS sensor, etc. When the automated drive operation range is based on the state of reception of radio waves, meanwhile, the automated drive investigation unit 31 may make inside/outside determinations for the automated drive operation range by receiving real-time information on the reception state. The automated drive investigation unit 31 may make inside/outside determinations for the automated drive operation range based on a plurality of pieces of information (e.g. a combination of a map database and the radio wave reception state etc.), rather than based on a single piece of information.

The remote function investigation unit 32 checks the operation state (whether in an operation state or in a non-operation state) of a remote function for performing remote travel of the automated drive vehicle 2 at predetermined timings. The remote function investigation unit 32 checks the operation state at the present and a future timing as the predetermined timings. Specifically, the remote function investigation unit 32 determines whether the automated drive vehicle 2 is inside a remote function operation range or outside the remote function operation range based on inputs from the external sensor 11 and the internal sensor 12. Remote travel with use of the remote function is executable if the automated drive vehicle 2 is inside the remote function operation range. Remote travel with use of the remote function is not executable if the automated drive vehicle 2 is outside the remote function operation range.

Whether the automated drive vehicle 2 is inside or outside the remote function operation range is determined in accordance with factors including the inside/outside relationship between the automated drive vehicle 2 and the remote function operation range determined in terms of the positional relationship, and the inside/outside relationship between the automated drive vehicle 2 and the remote function operation range determined in terms of the time axis, as with the automated drive operation range. The remote function investigation unit 32 can make inside/outside determinations for the remote function operation range by the same method as the automated drive investigation unit 31 makes inside/outside determinations for the automated drive operation range.

In particular, the remote function investigation unit 32 makes inside/outside determinations for the remote function operation range for each of the plurality of remote functions. That is, in the present embodiment, the remote function investigation unit 32 determines whether the automated drive vehicle 2 is inside a remote function operation range in which remote travel with remote assist as a remote function is enabled or outside the remote function operation range, and determines whether the automated drive vehicle 2 is inside a remote function operation range in which remote travel with remote drive as a remote function is enabled or outside the remote function operation range, for example.

The remote function investigation unit 32 outputs remote function operation information, which indicates whether the automated drive vehicle 2 is inside the remote function operation range or outside the remote function operation range, to the operation determination unit 33. The remote function operation information includes one or both of the information indicating the inside/outside relationship between the automated drive vehicle 2 and the remote function operation range determined in terms of the positional relationship and the information indicating the inside/outside relationship between the automated drive vehicle 2 and the remote function operation range determined in terms of the time axis. As discussed above, the remote function operation information includes information indicating whether the automated drive vehicle 2 is inside or outside the remote function operation range for each of the plurality of remote functions.

The operation determination unit 33 determines, based on the automated drive operation information and the remote function operation information, whether remote travel with use of the remote function is enabled when it is impossible to execute automated drive. The operation determination unit 33 determines whether remote travel with use of the remote function is enabled for each remote function.

Specifically, the operation determination unit 33 can calculate, based on the automated drive operation information from the automated drive investigation unit 31, whether the automated drive vehicle 2 is outside the automated drive operation range at the present timing and the position and/or the time at which the automated drive vehicle 2 moves out of the automated drive operation range at a future timing. In addition, the operation determination unit 33 can calculate, based on the remote function operation information from the remote function investigation unit 32, whether the automated drive vehicle 2 is outside the remote function operation range at the present timing and the position and/or the time at which the automated drive vehicle 2 moves out of the remote function operation range at a future timing. Consequently, the operation determination unit 33 can make inside/outside determinations for the remote function operation range for each remote function at the position and/or the time at which the automated drive vehicle 2 moves out of the automated drive operation range.

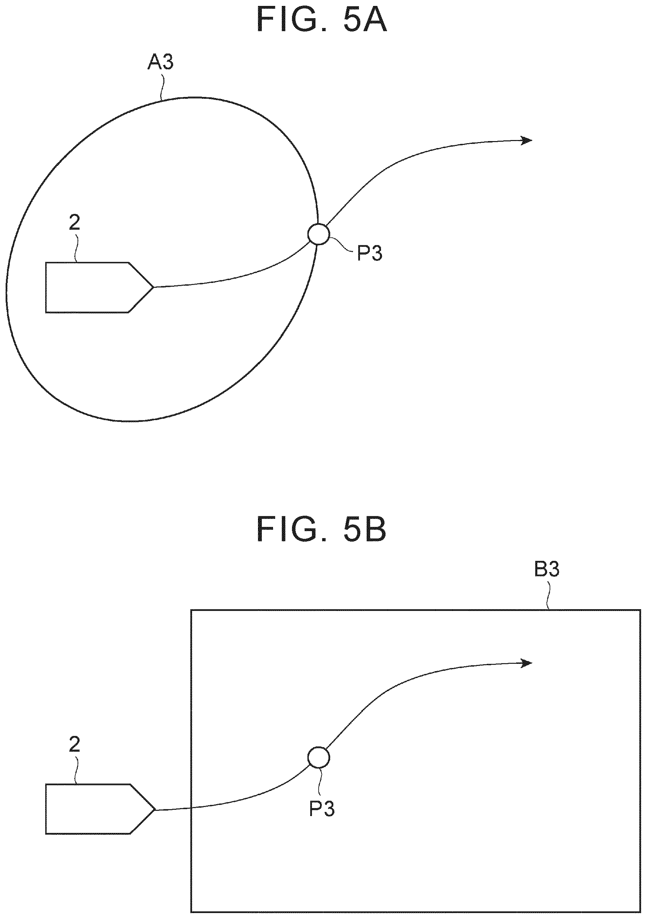

For example, as illustrated in FIG. 5A, the operation determination unit 33 can calculate, based on the automated drive operation information from the automated drive investigation unit 31, the position and/or the time at which the automated drive vehicle 2 moves out of an automated drive operation range A3 from the inside of the automated drive operation range A3. FIG. 5A illustrates a state in which the automated drive vehicle 2 moves out of the automated drive operation range A3 at a location P3. Next, as illustrated in FIG. 5B, the operation determination unit 33 can determine, based on the remote function operation information from the remote function investigation unit 32, whether the automated drive vehicle 2 is inside the remote function operation range when the automated drive vehicle 2 has reached the location P3. The operation determination unit 33 determines whether the automated drive vehicle 2 is inside the remote function operation range for each remote function. FIG. 5B illustrates a state in which the automated drive vehicle 2 is inside a remote function operation range B3, in which a certain one of the plurality of remote functions is executable, when the automated drive vehicle 2 has reached the location P3.

In this manner, the operation determination unit 33 can make inside/outside determinations for the automated drive operation range at a future time. Therefore, the operation determination unit 33 can determine, in advance, how long or how many times the automated drive vehicle 2 will be outside the automated drive operation range on a future locus of the automated drive vehicle 2. When the automated drive vehicle 2 is outside the automated drive operation range, the operation determination unit 33 determines that it is necessary to perform remote travel with use of the remote function (remote assist or remote drive).

The operation determination unit 33 functions as an automated drive determination unit that determines whether it is impossible to execute automated drive at a predetermined timing (at the present or at a certain future timing). The operation determination unit 33 also functions as a remote function determination unit that determines a remote function that is executable at a predetermined timing (at the present or at a certain future timing) when it is determined that it is impossible to execute automated drive.

The confidence degree calculation unit 34 predicts actions of targets (e.g. other vehicles, pedestrians, etc.) based on the detection result from the external sensor 11 which detects targets around the automated drive vehicle 2. Hereinafter, the targets around the automated drive vehicle 2 detected by the external sensor 11 will be referred to as "surrounding targets". In addition, the confidence degree calculation unit 34 calculates the action prediction confidence degree for predicted actions of the surrounding targets. The action prediction confidence degree indicates the degree of confidence in predicted actions of the surrounding targets. The confidence degree calculation unit 34 can calculate the action prediction confidence degree for the surrounding targets using a variety of methods.

For example, the confidence degree calculation unit 34 can calculate the action prediction confidence degree for the surrounding targets by applying a probability model. In this case, for example, the confidence degree calculation unit 34 inputs kinetic information (such as position, speed, and direction of movement) of the surrounding targets detected by the external sensor 11 to a vehicle motion prediction model constructed from general traffic data etc. Then, the confidence degree calculation unit 34 calculates all the future behavior that the surrounding targets may take and the possibility of occurrence of each such behavior. The confidence degree calculation unit 34 can use the highest one of the calculated probabilities as the action prediction confidence degree.

Alternatively, the confidence degree calculation unit 34 constructs a probability model from observed data on typical abnormal behavior beforehand. Then, the confidence degree calculation unit 34 can calculate the reciprocal of the likelihood of behavior of the surrounding targets for the probability model (closeness to the model), and use the calculated value as the action prediction confidence degree. That is, the confidence degree calculation unit 34 determines that it is difficult to predict actions when it seems that the surrounding targets are taking abnormal behavior.

Alternatively, the confidence degree calculation unit 34 may use qualitative information as the action prediction confidence degree. For example, the confidence degree calculation unit 34 may calculate the action prediction confidence degree based on whether a driver of a different vehicle around the automated drive vehicle 2 is in a drunk driving state. When the driver of the different vehicle is in a drunk driving state, it is conceivable that the different vehicle takes an unexpected action. Therefore, the confidence degree calculation unit 34 reduces the action prediction confidence degree when the driver of the different vehicle is in a drunk driving state.

For example, the confidence degree calculation unit 34 acquires a camera image of the driver of the different vehicle from the camera of the external sensor 11. The confidence degree calculation unit 34 may determine whether the driver of the different vehicle is in a drunk driving state by performing image processing etc. on the acquired camera image of the driver. The different vehicle is occasionally provided with a driver monitoring device that monitors the state of the driver. In this case, the confidence degree calculation unit 34 acquires a camera image from a camera provided in the driver monitoring device of the different vehicle to capture an image of the driver from the different vehicle. Then, the confidence degree calculation unit 34 may determine whether the driver is in a drunk driving state based on the camera image acquired from the different vehicle. Alternatively, the confidence degree calculation unit 34 may acquire information indicating whether the driver of the different vehicle is in a drunk driving state from the driver monitoring device mounted on the different vehicle. The different vehicle may be provided with an alcohol checker. In this case, the confidence degree calculation unit 34 may acquire the detection result from the alcohol checker of the different vehicle, and determine whether the driver of the different vehicle is in a drunk driving state.

The confidence degree calculation unit 34 can determine an emergency vehicle such as an ambulance as a target whose action is difficult to predict. In this case, the confidence degree calculation unit 34 can reduce the action prediction confidence degree for the emergency vehicle. The confidence degree calculation unit 34 may also reduce the action prediction confidence degree for targets around the automated drive vehicle 2 when the emergency vehicle is approaching. For example, the confidence degree calculation unit 34 can determine the presence or absence of an emergency vehicle approaching based on the result of detection of a siren sound etc. from an emergency vehicle by a sound detection sensor (audio sensor). Alternatively, the confidence degree calculation unit 34 may determine the presence or absence of an emergency vehicle approaching based on a notification of an emergency vehicle approaching made through road-to-vehicle communication.

The distance calculation unit 35 calculates the relative distance between a surrounding target and the automated drive vehicle 2. The distance calculation unit 35 calculates the relative distance between a surrounding target, for which the action prediction confidence degree has been calculated by the confidence degree calculation unit 34, and the automated drive vehicle 2.

The distance calculation unit 35 may use a value directly measured by the LIDAR of the external sensor 11, for example, as the relative distance. Besides, the distance calculation unit 35 may calculate the relative distance through image processing from a camera image captured by the camera of the external sensor 11. The distance calculation unit 35 may use a value directly measured by the radar of the external sensor 11 as the relative distance. The distance calculation unit 35 may acquire GPS information on a different vehicle through vehicle-to-vehicle communication, and calculate the relative distance based on the position of the different vehicle based on the acquired GPS information and the position of the automated drive vehicle 2.

The distance calculation unit 35 may calculate the relative distance in consideration of the traveling direction. For example, the distance calculation unit 35 may adjust the relative distance, such as by determining that the relative distance is long when a surrounding target is traveling in the direction away from the automated drive vehicle 2. The distance calculation unit 35 may use a spatial-temporal distance, which includes a speed in addition to a spatial distance, as the relative distance. Alternatively, the distance calculation unit 35 may use a time before approaching a surrounding target, or a time to collision (TTC), as the relative distance. The distance calculation unit 35 may use a probabilistic index, such as the possibility of a collision with a surrounding target, as the relative distance. The distance calculation unit 35 may use a combination of a plurality of these distance criteria as the relative distance.

The function selection unit 36 selects a remote function to be executed, from among the plurality of remote functions determined as executable by the operation determination unit 33. The function selection unit 36 selects a remote function to be executed based on the action prediction confidence degree calculated by the confidence degree calculation unit 34 and the relative distance calculated by the distance calculation unit 35. When the operation determination unit 33 determines only one remote function as executable, the function selection unit 36 selects the remote function determined as executable by the operation determination unit 33.

In the remote assist, among the remote functions, a steering operation, an accelerator operation, a brake operation, etc. are not performed by the remote operator R. Therefore, the remote assist has low requirements for a communication delay, a communication capacity, etc. compared to the remote drive, and does not use a special operation device (such as a steering controller). In addition, the remote assist occupies the remote operator R for a short time, and therefore requires a low cost.

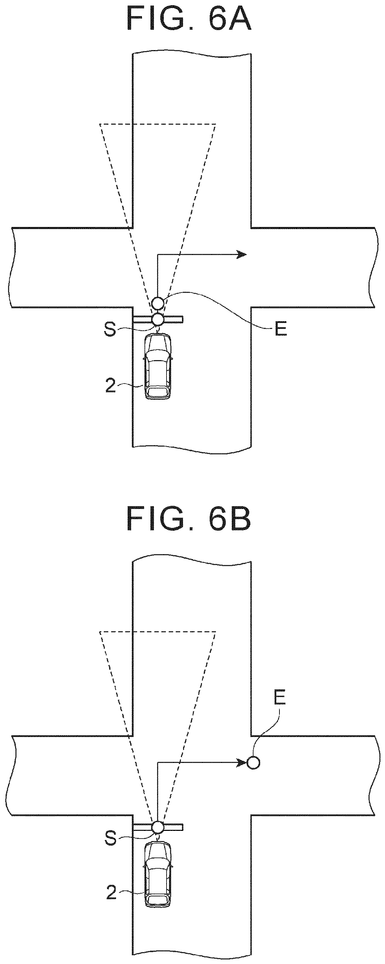

Specifically, the remote operator R that provides remote assist only makes determinations alternatively. Therefore, transmission and reception of information (e.g. images captured by a camera etc.) for providing remote assist between the automated drive vehicle 2 and the remote travel server 4 may be stopped immediately after a determination is made by the remote operator R. For example, there is a case where remote assist for allowing the automated drive vehicle 2 to enter an intersection is to be provided as illustrated in FIG. 6A. In this case, transmission and reception of information for providing remote assist is started at a location S before entering the intersection. In addition, transmission and reception of information is stopped at a location E after the remote assist operator has made a determination for entering the intersection.

On the other hand, the remote operator R that provides remote drive performs all recognitions, determinations, and operations. Therefore, it is necessary that information (e.g. images captured by a camera) for providing remote drive transmitted and received between the automated drive vehicle 2 and the remote travel server 4 is transmitted and received until remote drive of the automated drive vehicle 2 is completed. For example, there is a case where remote drive for allowing the automated drive vehicle 2 to pass through an intersection is to be provided as illustrated in FIG. 6B. In this case, transmission and reception of information for providing remote drive is started at a location S before entering the intersection. Then, remote drive of the automated drive vehicle 2 by the remote drive operator is started, and transmission and reception of information is stopped at a location E at which the automated drive vehicle 2 has passed through the intersection.

In this manner, the time for which the remote drive operator that provides remote drive is occupied is generally longer than the time for which the remote assist operator is occupied.

Also in scenes such as Remote Assist Examples 1 to 6 discussed above and mentioned as examples of the remote assist, the situations are occasionally not handled easily with the remote assist, depending on the behavior of other vehicles, pedestrians, etc. around the automated drive vehicle 2. In particular, the situations are not handled easily when there are other vehicles, pedestrians, etc., whose actions are difficult to predict, such as when a different vehicle driven by a driver in a drunk driving state is present nearby. In such a case, it is occasionally appropriate to select remote drive, which occupies the remote operator R for a long time and allows human determinations and operations to be made for a long period and which is therefore more flexible.

Therefore, when there is a surrounding target whose action is difficult to predict, the function selection unit 36 selects remote drive, which occupies the remote operator R for a long time, from among remote assist and remote drive. The function selection unit 36 uses the action prediction confidence degree calculated by the confidence degree calculation unit 34 to determine whether it is difficult to predict actions. That is, the function selection unit 36 selects a remote function that occupies the remote operator R for a long time when the action prediction confidence degree is low, compared to when the action prediction confidence degree is high.

Further, the function selection unit 36 selects a remote function that occupies the remote operator R for a short time when the distance relative to a surrounding target calculated by the distance calculation unit 35 is long, compared to when the relative distance is short. In this manner, the function selection unit 36 selects a remote function in consideration of the distance relative to a surrounding target, in addition to the action prediction confidence degree.

The remote travel requesting unit 37 sends a remote request to the remote travel server 4 (remote operator R) such that the remote function selected by the function selection unit 36 is executed when the automated drive vehicle 2 cannot be driven autonomously (outside the automated drive operation range). The remote travel requesting unit 37 transmits various types of information that is necessary to execute the requested remote function, such as identification information, vehicle position information, and external environment information on the automated drive vehicle 2, to the remote travel server 4 together with the remote request.

Returning to FIG. 2, the trajectory generation unit 25 generates a trajectory that is used for automated drive of the automated drive vehicle 2. The trajectory generation unit 25 generates a trajectory for automated drive based on a travel route set in advance, map information, position information on the automated drive vehicle 2, the external environment of the automated drive vehicle 2, and the travel state of the automated drive vehicle 2.

The travel route is a route along which the automated drive vehicle 2 travels through automated drive. The trajectory generation unit 25 calculates a travel route for automated drive based on a destination, map information, and position information on the automated drive vehicle 2, for example. The travel route may be set by the navigation system. The destination may be set by an occupant of the automated drive vehicle 2, or may be automatically suggested by the automated drive ECU 20, the navigation system, etc.

The trajectory includes a path along which the vehicle travels through automated drive and a vehicle speed profile for automated drive. The path is a locus along which the vehicle under automated drive is expected to travel on the travel route. The path can be data (steering angle profile) on variations in the steering angle of the automated drive vehicle 2 that match positions on the travel route, for example. The positions on the travel route are set vertical positions set at predetermined intervals (e.g. 1 m) in the traveling direction of the travel route, for example. The steering angle profile is data in which a target steering angle is associated with each set vertical position.

The trajectory generation unit 25 generates a path along which the automated drive vehicle 2 travels based on the travel route, map information, the external environment of the automated drive vehicle 2, and the travel state of the automated drive vehicle 2, for example. The trajectory generation unit 25 generates a path such that the automated drive vehicle 2 passes through the center (center in the lane width direction) of a lane included in the travel route, for example.

The vehicle speed profile is data in which the target vehicle speed is associated with each set vertical position, for example. The set vertical position may be set with reference to the travel time of the automated drive vehicle 2, rather than the distance. The set vertical position may be set as a position to be reached by the vehicle in one second and a position to be reached by the vehicle in two seconds.

The trajectory generation unit 25 generates a vehicle speed profile based on the path and information on traffic regulations, such as the legal speed, included in map information, for example. A set speed set in advance for a position or a section on a map may be used instead of the legal speed. The trajectory generation unit 25 generates a trajectory for automated drive from the path and the vehicle speed profile. The method for the trajectory generation unit 25 to generate a trajectory is not limited to that discussed above, and a method related to automated drive may be adopted. The same also applies to the path.

When the remote function selection unit 24 sends a request for remote assist, from among the remote functions, to the remote travel server 4, the trajectory generation unit 25 generates a trajectory that matches the requested remote assist in advance. Choices for the content of the remote assist are determined in advance in accordance with the situation of the automated drive vehicle 2. For example, choices for the content of the remote assist at the time of a right turn at an intersection include suggestion of starting a right turn (traveling) and suggestion of waiting. Choices for the content of the remote assist at the time of a right turn at an intersection may include suggestion of traveling straight instead of making a right turn, and may include suggestion of emergency evacuation. It is not necessary that the trajectory generation unit 25 should generate a trajectory in advance, and the trajectory generation unit 25 may generate a trajectory corresponding to the content of remote assist after receiving the content of remote assist.

The travel control unit 26 executes automated drive of the automated drive vehicle 2. The travel control unit 26 executes automated drive of the automated drive vehicle 2 based on the external environment of the automated drive vehicle 2, the travel state of the automated drive vehicle 2, and the trajectory generated by the trajectory generation unit 25, for example. The travel control unit 26 performs automated drive of the automated drive vehicle 2 by transmitting a control signal to the actuator 15.

When the remote function selection unit 24 sends a remote request to the remote travel server 4, the travel control unit 26 stands by to receive a remote instruction from the remote travel server 4. When a remote instruction is received, the travel control unit 26 controls travel of the automated drive vehicle 2 such that remote assist or remote drive included in the remote instruction is executed. When a remote instruction for remote assist is received, for example, the travel control unit 26 performs automated drive of the automated drive vehicle 2 based on the instruction for remote assist. Meanwhile, when a remote instruction for remote drive is received, for example, the travel control unit 26 transmits a control signal to the actuator 15 such that the automated drive vehicle 2 travels in conformity to the instruction for remote drive.

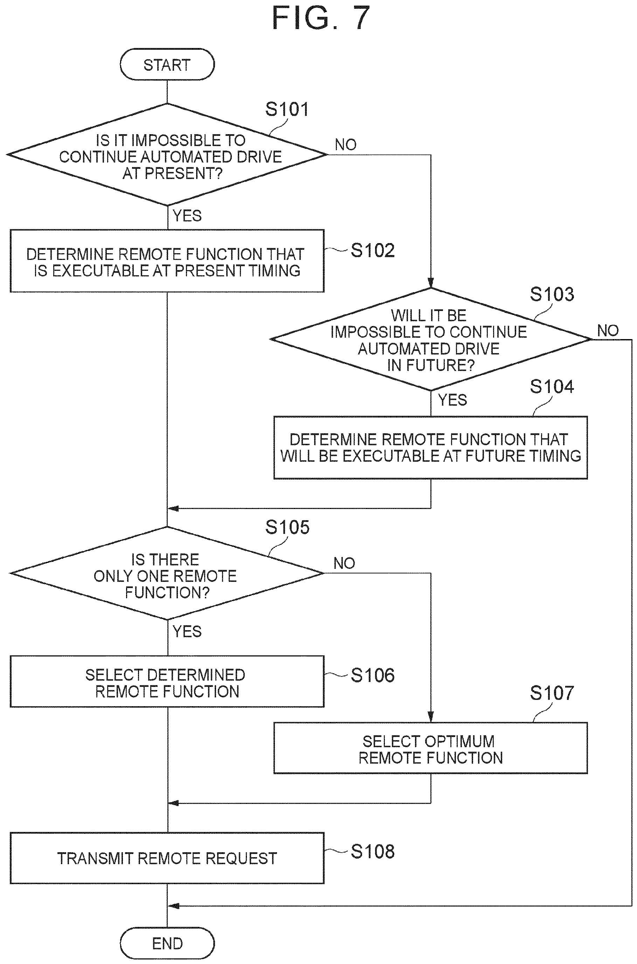

Next, the flow of a remote function selection process performed by the remote function selection unit 24 will be described with reference to the flowchart illustrated in FIG. 7. The process illustrated in FIG. 7 is repeatedly executed at predetermined time intervals. As illustrated in FIG. 7, the operation determination unit 33 of the remote function selection unit 24 determines, based on the automated drive operation information from the automated drive investigation unit 31, whether it is impossible to continue automated drive at the present timing (S101). When it is impossible to continue automated drive at the present timing (S101: YES), the operation determination unit 33 determines a remote function that is executable at the present timing based on the remote function operation information from the remote function investigation unit 32 (S102).

When it is possible to continue automated drive at the present timing (S101: NO), on the other hand, the operation determination unit 33 determines, based on the automated drive operation information from the automated drive investigation unit 31, whether it will be impossible to continue automated drive at a future timing (S103). The future timing may be a time determined in advance ahead of the present timing. When it is impossible to continue automated drive at the future timing (S103: YES), the operation determination unit 33 determines, based on the remote function operation information from the remote function investigation unit 32, a remote function that is executable at the future timing at which it is impossible to continue automated drive (S104). When it is possible to continue automated drive at the future timing (S103: NO), on the other hand, the automated drive ECU 20 continues automated drive of the automated drive vehicle 2.

After determining an executable remote function (after the process in S102 or S104), the function selection unit 36 determines whether there is only one remote function determined as executable (S105). The function selection unit 36 determines whether there is only one remote function or there is a plurality of remote functions determined as executable. When there is no remote function determined as executable, there is no remote function that is executable when it is impossible to execute automated drive. In this case, the automated drive ECU 20 can take a variety of measures, such as stopping the automated drive vehicle 2 or informing an occupant of the automated drive vehicle 2, when automated drive cannot be continued.

When there is only one remote function determined as executable (S105: YES), the function selection unit 36 selects the remote function determined as executable as a remote function to be executed (S106). When there is not only one remote function determined as executable (S105: NO), that is, when there is a plurality of remote functions, on the other hand, the function selection unit 36 selects a remote function to be executed, from among the remote functions, based on the action prediction confidence degree calculated by the confidence degree calculation unit 34 and the relative distance calculated by the distance calculation unit 35 (S107). After a remote function to be executed is selected (after the process in S106 or S107), the remote travel requesting unit 37 sends a remote request to the remote travel server 4 such that the selected remote function is executed at the timing (the present timing or a future timing) when it is impossible to execute automated drive (S108).

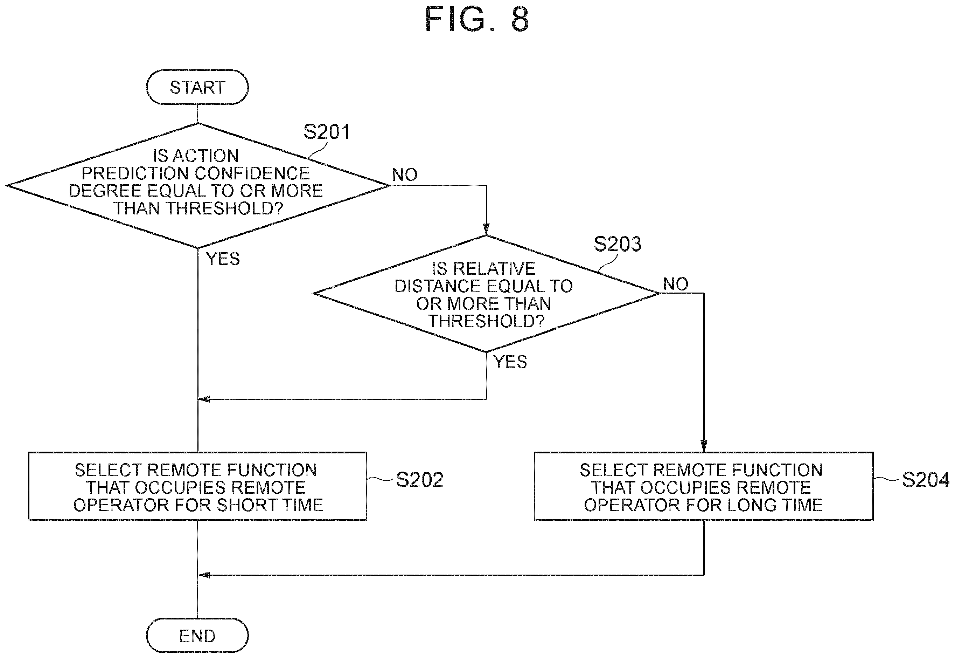

Next, the remote function selection process performed in S107 in FIG. 7 will be described in detail with reference to the flowchart in FIG. 8. The example illustrated in FIG. 8 is an example of a typical embodiment. A threshold for the confidence degree determined in advance is used for classification into cases with a high action prediction confidence degree and cases with a low action prediction confidence degree. That is, cases where the action prediction confidence degree is equal to or more than the threshold for the confidence degree set in advance are defined as cases with a high action prediction confidence degree, and cases where the action prediction confidence degree is less than the threshold for the confidence degree set in advance are defined as cases with a low action prediction confidence degree. Likewise, a threshold for the relative distance determined in advance is used for classification into cases with a long distance relative to a surrounding target and cases with a short distance relative to a surrounding target. That is, cases where the relative distance is equal to or more than the threshold for the relative distance set in advance are defined as cases with a long relative distance, and cases where the relative distance is less than the threshold for the relative distance set in advance are defined as cases with a short relative distance.

As illustrated in FIG. 8, the function selection unit 36 determines whether the action prediction confidence degree calculated by the confidence degree calculation unit 34 is equal to or more than the threshold for the confidence degree set in advance (S201). When the action prediction confidence degree is equal to or more than the threshold for the confidence degree (S201: YES), the function selection unit 36 selects a remote function (remote assist in the present embodiment) that occupies the remote operator R for a short time, from among the remote functions that are executable (S202).

When the action prediction confidence degree is not equal to or more than the threshold for the confidence degree (S201: NO), on the other hand, the function selection unit 36 determines whether the distance relative to a surrounding target calculated by the distance calculation unit 35 is equal to or more than the threshold for the relative distance determined in advance (S203). When the distance relative to a surrounding target is equal to or more than the threshold for the relative distance set in advance (S203: YES), the function selection unit 36 performs the process in S202 discussed above. When the distance relative to a surrounding target is not equal to or more than the threshold for the relative distance set in advance (S203: NO), the function selection unit 36 selects a remote function (remote drive in the present embodiment) that occupies the remote operator R for a long time, from among the remote functions that are executable (S204).

The threshold for the confidence degree and the threshold for the relative distance set in advance may be fixed values, or may be variable values. When such thresholds are variable values, the distance calculation unit 35 may increase and decrease the thresholds in accordance with the relative vehicle speed (relative speed). For example, the distance calculation unit 35 can increase the threshold for the confidence degree and/or the threshold for the relative distance when the relative vehicle speed is high, since it takes a short time to approach the surrounding target.

The function selection unit 36 may use a determination map in which the action prediction confidence degree and the relative distance and remote functions to be selected are correlated with each other, for example, rather than selecting a remote function using the thresholds. In this manner, the function selection unit 36 may select a remote function in consideration of the relative relationship between the action prediction confidence degree and the relative distance. Besides, the function selection unit 36 may select a remote function to be selected using a stochastic method, or may select a remote function to be selected using a determination unit constructed using a method such as machine learning.

As has been described above, the confidence degree calculation unit 34 calculates the action prediction confidence degree for a surrounding target around the automated drive vehicle 2. When a plurality of remote functions is determined as executable when it is impossible to execute automated drive, the function selection unit 36 selects a remote function to be executed based on the action prediction confidence degree for a surrounding target. In this manner, the remote function selection unit 24 can appropriately select a remote function to be executed using the action prediction confidence degree even when a plurality of remote functions is executable.

The function selection unit 36 selects a remote function that occupies the remote operator R for a long time when the action prediction confidence degree is low, compared to when the action prediction confidence degree is high. When the action prediction confidence degree for a surrounding target is low, the surrounding target occasionally takes an action that has not been predicted by the automated drive vehicle 2. When such a surrounding target is present, it is possible to flexibly handle variations in the action of the surrounding target and suppress the flow of traffic being obstructed, by the remote operator R intervening in the drive operation of the automated drive vehicle 2. Therefore, the remote function selection unit 24 selects a remote function that occupies the remote operator R for a long time when the action prediction confidence degree for a surrounding target is low. Consequently, the remote function selection unit 24 can select a remote function that is appropriate for the situation even when a vehicle whose action is difficult to predict, such as a vehicle driven by a driver in a drunk driving state, is present around the automated drive vehicle 2, for example. In this manner, the remote function selection unit 24 can select a more appropriate remote function based on the action prediction confidence degree for a surrounding target.

The remote function selection unit 24 includes the distance calculation unit 35 which calculates the relative distance between the surrounding target, the action prediction confidence degree for which has been calculated by the confidence degree calculation unit 34, and the automated drive vehicle 2. The function selection unit 36 selects a remote function to be executed based on the action prediction confidence degree and the relative distance that have been calculated. In this case, the remote function selection unit 24 can select a more appropriate remote function in consideration of the relative distance between the surrounding target and the automated drive vehicle 2.

The function selection unit 36 selects a remote function that occupies the remote operator R for a short time when the relative distance between the surrounding target and the automated drive vehicle 2 is long, compared to when the relative distance is short. When the relative distance between the automated drive vehicle 2 and the surrounding target is long, there is a temporal margin before the automated drive vehicle 2 and the surrounding target approach each other. In such a case, it is occasionally not necessary for the remote operator R to perform a positive drive operation of the automated drive vehicle 2. Therefore, the remote function selection unit 24 selects a remote function that occupies the remote operator R for a short time when the relative distance between the automated drive vehicle 2 and the surrounding target is long. Consequently, the remote function selection unit 24 can suppress a remote function (remote drive in the present embodiment) that occupies the remote operator R for a long time being selected excessively, and can suppress the cost for occupying the remote operator R. In this manner, the remote function selection unit 24 can select a more appropriate remote function based on the relative distance between the automated drive vehicle 2 and the surrounding target.

The remote functions include remote assist and remote drive. Consequently, the remote function selection unit 24 can select a more appropriate remote function from the remote functions including remote assist and remote drive.

## Claims

1. A remote function selection device (24) configured to select a remote function to be executed in an automated drive vehicle (2) configured to execute automated drive and remote travel in which the automated drive vehicle (2) travels based on a remote instruction from a remote operator (R), the automated drive vehicle (2) being provided with a plurality of remote functions for performing the remote travel, the remote function selection device (24) being **characterised in that** it comprises:
an automated drive determination unit (33) configured to determine whether executing the automated drive at a predetermined timing is impossible;
a remote function determination unit (33) configured to determine the remote function that is executable at the predetermined timing when the automated drive determination unit determines that executing the automated drive is impossible;
a confidence degree calculation unit (34) configured to
predict an action of a target around the automated drive vehicle (2) based on a detection result from an external sensor (11) configured to detect the target
calculate an action prediction confidence degree for the predicted action of the target; and
a function selection unit (36) configured to select the remote function to be executed, wherein
when the remote function determination unit (33) determines that a plurality of remote functions is executable, the function selection unit (36) is configured to select the remote function to be executed among the remote functions based on the action prediction confidence degree calculated by the confidence degree calculation unit (34).

2. The remote function selection device (24) according to claim 1, wherein the function selection unit (36) is configured to select the remote function that occupies the remote operator (R) for a long time when the action prediction confidence degree is low, compared to when the action prediction confidence degree is high.

3. The remote function selection device (24) according to claim 1 or 2, further comprising a distance calculation unit (35) configured to calculate a relative distance between the target and the automated drive vehicle (2), wherein
the function selection unit (36) is configured to select the remote function to be executed among the remote functions determined by the remote function determination unit (33), based on the action prediction confidence degree and the relative distance.

4. The remote function selection device (24) according to claim 3, wherein the function selection unit (36) is configured to select the remote function that occupies the remote operator (R) for a short time when the relative distance is long, compared to when the relative distance is short.

5. The remote function selection device (24) according to any one of claims 1 to 4, wherein the remote functions include remote assist and remote drive.

## Patentansprüche

1. Fernfunktionsauswahlvorrichtung (24), die konfiguriert ist, um eine Fernfunktion auszuwählen, die in einem automatisierten Antriebsfahrzeug (2) auszuführen ist, das konfiguriert ist, um einen automatisierten Antrieb und ein Fernfahren auszuführen, bei dem das automatisierte Antriebsfahrzeug (2) basierend auf einem Fernbefehl von einem Fernbediener (R) fährt, wobei das automatisierte Antriebsfahrzeug (2) mit einer Vielzahl von Fernfunktionen zum Durchführen des Fernfahrens versehen ist, wobei die Fernfunktionsauswahlvorrichtung (24) **dadurch gekennzeichnet ist, dass** sie Folgendes umfasst:
eine Bestimmungseinheit für automatisierten Antrieb (33), die konfiguriert ist, um zu bestimmen, ob ein Ausführen des automatisierten Antriebs zu einem vorbestimmten Zeitpunkt unmöglich ist;
eine Fernfunktionsbestimmungseinheit (33), die konfiguriert ist, um die Fernfunktion zu bestimmen, die zu dem vorbestimmten Zeitpunkt ausführbar ist, wenn die Bestimmungseinheit für automatisierten Antrieb bestimmt, dass ein Ausführen des automatischen Antriebs unmöglich ist;
eine Konfidenzgrad-Berechnungseinheit (34), die konfiguriert ist, um
eine Aktion eines Ziels um das automatisierte Antriebsfahrzeug (2) basierend auf einem Erfassungsresultat von einem externen Sensor (11) vorherzusagen, der konfiguriert ist, um das Ziel zu erfassen,
ein Aktionsvorhersage-Konfidenzgrad für die vorhergesagte Aktion des Ziels zu berechnen; und
eine Funktionsauswahleinheit (36), die konfiguriert ist, um die Funktion auszuwählen, die ausgeführt werden soll,
wobei, wenn die Fernfunktionsbestimmungseinheit (33) bestimmt, dass eine Vielzahl von Fernfunktionen ausführbar ist, die Funktionsauswahleinheit (36) konfiguriert ist, um die auszuführende Fernfunktion aus den Fernfunktionen basierend auf dem Aktionsvorhersage-Konfidenzgrad auszuwählen, der von der Konfidenzgrad-Berechnungseinheit (34) ausgewählt wird.

2. Fernfunktionsauswahlvorrichtung (24) nach Anspruch 1, wobei die Funktionsauswahleinheit (36) konfiguriert ist, um die Fernfunktion auszuwählen, die den Fernbediener (R) über eine lange Zeit beschäftigt, wenn der Aktionsvorhersage-Konfidenzgrad niedrig ist, im Vergleich dazu, wenn der Aktionsvorhersage-Konfidenzgrad hoch ist.

3. Fernfunktionsauswahlvorrichtung (24) nach Anspruch 1 oder 2, ferner umfassend eine Abstandsberechnungseinheit (35), die konfiguriert ist, um einen relativen Abstand zwischen dem Ziel und dem automatisierten Antriebsfahrzeug (2) zu berechnen, wobei
die Funktionsauswahleinheit (36) konfiguriert ist, um die auszuführende Fernfunktion aus den Fernfunktionen, die von der Fernfunktionsbestimmungseinheit (33) bestimmt werden, basierend auf dem Aktionsvorhersage-Konfidenzgrad und dem relativen Abstand auszuwählen.

4. Fernfunktionsauswahlvorrichtung (24) nach Anspruch 3, wobei die Funktionsauswahleinheit (36) konfiguriert ist, um die Fernfunktion auszuwählen, die den Fernbediener (R) über eine kurze Zeit beschäftigt, wenn der relative Abstand groß ist, im Vergleich dazu, wenn der relative Abstand kurz ist.

5. Fernfunktionsauswahlvorrichtung (24) nach einem der Ansprüche 1 bis 4, wobei die Fernfunktionen Fernunterstützung und Fernantrieb beinhalten.

## Revendications

1. Dispositif de sélection de fonction à distance (24) configuré pour sélectionner une fonction à distance devant être exécutée dans un véhicule à conduite automatisée (2) configuré pour exécuter une conduite automatisée et un déplacement à distance dans lequel le véhicule à conduite automatisée (2) se déplace sur la base d'une instruction à distance provenant d'un opérateur à distance (R), le véhicule à conduite automatisée (2) étant pourvu d'une pluralité de fonctions à distance pour réaliser le déplacement à distance, le dispositif de sélection de fonction à distance (24) étant **caractérisé en ce qu'**il comprend :
une unité de détermination de conduite automatisée (33) configurée pour déterminer si une exécution de la conduite automatisée à un instant prédéterminé est impossible ;
une unité de détermination de fonction à distance (33) configurée pour déterminer la fonction à distance qui peut être exécutée à l'instant prédéterminé quand l'unité de détermination de conduite automatisée détermine qu'une exécution de la conduite automatisée est impossible ;
une unité de calcul de degré de confiance (34) configurée pour
prédire une action d'une cible autour du véhicule à conduite automatisée (2) sur la base d'un résultat de détection provenant d'un capteur externe (11) configuré pour détecter la cible ;
calculer un degré de confiance de prédiction d'action pour l'action prédite de la cible ; et
une unité de sélection de fonction (36) configurée pour sélectionner la fonction à distance devant être exécutée, dans lequel
quand l'unité de détermination de fonction à distance (33) détermine qu'une pluralité de fonctions à distance peut être exécutée, l'unité de sélection de fonction (36) est configurée pour sélectionner la fonction à distance à exécuter parmi les fonctions à distance sur la base du degré de confiance de prédiction d'action calculé par l'unité de calcul de degré de confiance (34).

2. Dispositif de sélection de fonction à distance (24) selon la revendication 1, dans lequel l'unité de sélection de fonction (36) est configurée pour sélectionner la fonction à distance qui occupe l'opérateur à distance (R) pendant longtemps quand le degré de confiance de prédiction d'action est faible, comparé à quand le degré de confiance de prédiction d'action est élevé.

3. Dispositif de sélection de fonction à distance (24) selon la revendication 1 ou 2, comprenant en outre une unité de calcul de distance (35) configurée pour calculer une distance relative entre la cible et le véhicule à conduite automatisée (2), dans lequel
l'unité de sélection de fonction (36) est configurée pour sélectionner la fonction à distance devant être exécutée parmi les fonctions à distance déterminées par l'unité de détermination de fonction à distance (33), sur la base du degré de confiance de prédiction d'action et de la distance relative.

4. Dispositif de sélection de fonction à distance (24) selon la revendication 3, dans lequel l'unité de sélection de fonction (36) est configurée pour sélectionner la fonction à distance qui occupe l'opérateur à distance (R) pendant un temps court quand la distance relative est longue, comparé à quand la distance relative est courte.

5. Dispositif de sélection de fonction à distance (24) selon l'une quelconque des revendications 1 à 4, dans lequel les fonctions à distance comprennent l'aide à distance et la conduite à distance.
